(19) Europäisches Patentamt
European Patent Office
Office européen des brevets

(11) Veröffentlichungsnummer: **0 185 989**
**A2**

(12) **EUROPÄISCHE PATENTANMELDUNG**

(21) Anmeldenummer: 85115390.8

(22) Anmeldetag: 04.12.85

(51) Int. Cl.⁴: C 08 K 5/34
C 08 L 67/00, C 08 L 69/00
C 08 L 71/00, C 08 L 77/00

(30) Priorität: 08.12.84 DE 3444786

(43) Veröffentlichungstag der Anmeldung:
02.07.86 Patentblatt 86/27

(84) Benannte Vertragsstaaten:
BE DE FR GB NL

(71) Anmelder: BASF Aktiengesellschaft
Carl-Bosch-Strasse 38
D-6700 Ludwigshafen(DE)

(72) Erfinder: Mitulla, Konrad, Dr.
Schwalbenweg 31
D-6700 Ludwigshafen(DE)

(72) Erfinder: Hambrecht, Juergen, Dr.
Werderstrasse 30
D-6900 Heidelberg(DE)

(72) Erfinder: Boehlke, Klaus, Dr.
Gerhart-Hauptmann-Strasse 53
D-6717 Hessheim(DE)

(72) Erfinder: Schmitt, Burghard, Dr.
Braeunigstrasse 12
D-6520 Worms(DE)

(72) Erfinder: Muench, Volker, Dr.
Luitpoldstrasse 114
D-6700 Ludwigshafen(DE)

(54) **Gegen Thermooxidation geschützte Mischungen aus Hydroxyl- oder Aminogruppen enthaltenden Polymerisaten, deren Herstellung und Verwendung.**

(57) Die Erfindung betrifft thermoplastische Mischungen bestehend aus einem Hydroxyl- oder Aminogruppen enthaltenden Polymerisat, einem Oxidationsstabilisator der allgemeinen Formel (I):

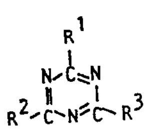

(I)

worin

$R^1$ = ein Halogenatom, $R^2$ = ein über –O–, –NH– oder –S–gebundener organischer Rest, und $R^3$ = ein Halogen oder ein Rest wie $R^2$, gegebenenfalls mindestens einem Styrolpolymerisat und gegebenenfalls üblichen Zusatzstoffen in üblichen Mengen, deren Herstellung und deren Verwendung zur thermoplastischen Verarbeitung zu Formteilen.

Croydon Printing Company Ltd.

Gegen Thermooxidation geschützte Mischungen aus Hydroxyl- oder Aminogruppen enthaltenden Polymerisaten, deren Herstellung und Verwendung

Die Erfindung betrifft thermoplastische Mischungen bestehend aus (a) einem Hydroxyl- oder Aminogruppen enthaltenden Polymerisat, (b) einem Oxidationsstabilisator, (c) gegebenenfalls mindestens einem Styrolpolymerisat und (d) gegebenenfalls üblichen Zusatzstoffen in üblichen Mengen, deren Herstellung durch übliches Mischen mit nachfolgendem Erhitzen und deren Verwendung zur thermoplastischen Verarbeitung zu Formteilen.

Bei derartigen Mischungen handelt es sich um ungeformte Massen, die durch Mischen der Mischungskomponenten nach üblichen Verfahren zustande kommen und die sich durch thermoplastische Verarbeitung nach üblichen Verarbeitungsmethoden innerhalb bestimmter Temperaturbereiche zu Formteilen oder zu Halbzeug verarbeiten lassen. Die Mischungen können als Granulat, sie können aber auch pulverförmig oder sonstwie vorgeformt vorliegen.

Thermoplastische Mischungen aus Hydroxyl- oder Aminogruppen enthaltenden Polymerisaten und gegebenenfalls Styrolpolymerisaten, die übliche Zusatzstoffe in üblichen Mengen und Stabilisatoren enthalten sind aus der Literatur hinlänglich bekannt (vgl. US-Patente 3 257 357, 3 306 874, 3 369 656, 3 383 435, 3 838 102, 4 128 602 und 4 128 603 sowie die DE-Offenlegungsschriften 16 94 272, 19 32 234, 21 62 154, 24 34 848 und 30 43 893). Bei diesen Massen kann die thermische Oxidationsempfindlichkeit z.B. von Poly(phenylenethern) enthaltenden Mischungen durch Einmischen von Stabilisatoren verbessert werden. So werden zu diesem Zweck unterschiedliche Phosphitstabilisatoren empfohlen (vgl. US-A-2 952 701, DE-A-32 38 740, 32 41 542, 34 19 376 und 34 19 377).

Ein Nachteil aller derart stabilisierter Formmassen ist jedoch die ausgeprägte Instabilität bei Temperaturlagerung oberhalb Raumtemperatur. Die Massen unterliegen der Thermooxidation und verlieren in Abhängigkeit von Temperatur und Zeit ihre guten mechanischen Eigenschaften und erfahren zudem eine deutliche Verfärbung. Dies gilt in besonderem Maße, wenn z.B. die Poly(phenylenether)harzmassen nicht völlig von den bei der Polymerisation auftretenden Nebenprodukten wie 3,3',5,5'-Tetramethyldiphenochinon und/oder 3,3',5,5'-Tetramethyl-4,4'-dihydroxibiphenyl befreit worden sind und diese Nebenprodukte in den zu verarbeitenden Massen enthalten sind.

Aufgabe der vorliegenden Erfindung war es deshalb, Stabilisatoren gegen die Thermooxidation von Hydroxyl- oder Aminogruppen enthaltenden Polymerisation aufzufinden, die einen guten Schutz gegen Verfärbung und gegen

Fre/P

den Abfall der mechanischen Eigenschaften auch dann bieten, wenn die Polymerisate nennenswerte Mengen an Nebenprodukten enthalten.

Diese Aufgabe wurde durch thermoplastische Mischungen gemäß Patentansprüchen 1 bis 6, sowie deren Herstellung nach Patentanspruch 7 gelöst.

Unter Hydroxyl- oder Aminogruppen enthaltenden Polymerisaten werden alle einschlägig bekannten Polymerisate verstanden, welche an den Seitenketten oder an der Hauptkette endständige OH- oder $NH_2$-Gruppen aufweisen. Hierzu sind insbesondere zu zählen die Poly(ether), Poly(amide), Poly(carbonate) oder die Poly(ester).

Die Poly(amide) sind an sich bekannt und umfassen die halbkristallinen und amorphen Harze mit Molekulargewichten von mindestens 5000, die gewöhnlich als Nylon bezeichnet werden. Solche Poly(amide) sind in den US-Patenten 2 071 250, 2 071 251, 2 130 523, 2 130 948, 2 241 322, 2 312 966, 2 512 606 und 3 393 210 beschrieben.

Für die Herstellung von Poly(carbonaten) werden geeignete Bisphenole eingesetzt, wie sie u.a. in der Monographie von H. Schnell in Chemistry and Physics of Polycarbonates, Interscience Publishers, New York, 1964, in der US-A-2 999 835 und in der DE-A-22 48 817 beschrieben sind. Besonders bevorzugt sind Poly(carbonate) auf der Basis von 2,2-Bis-(4-hydroxyphenyl)-propan.

Gesättigte Poly(ester) sind Kondensationsprodukte aus aromatischen Dicarbonsäuren (oder deren Derivaten) und aliphatischen oder cycloaliphatischen Diolen, insbesondere Polyalkylenterephthalate, die man aus Terephthalsäure (Derivaten) und (Cyclo)Alkylendiolen mit 2 bis 10 C-Atomen nach bekannten Verfahren (s. z.B. Kunststoff-Handbuch, Bd. VIII, S. 695 ff., Carl-Hanser-Verlag, München, 1973 und die dort angegebenen Literaturstellen) erhalten kann.

Hydroxylgruppenhaltige Poly(ether) werden insbesondere durch Polymerisation von Ethylen- und/oder Propylenoxid erhalten (vgl. Kunststoff-Handbuch Bd. VII, S. 60 ff, Carl-Hanser-Verlag, München 1966).

Bei den Poly(phenylenethern) handelt es sich um Verbindungen auf der Basis von in ortho-Position disubstituierten Poly(phenylenoxiden), wobei der Ethersauerstoff der einen Einheit an den Benzolkern der benachbarten Einheit gebunden ist. Dabei sollten mindestens 50 Einheiten miteinander verknüpft sein. Die Poly(phenylenether) können in ortho-Stellung zum Sauerstoff, Wasserstoff, Halogen, Kohlenwasserstoffe, die kein $\alpha$-ständiges

tertiares Wasserstoffatom besitzen, Halogenkohlenwasserstoffe, Phenylenreste und Kohlenwasserstoffoxyreste tragen. So kommen insbesondere in Frage: Poly(2,6-dichlor-1,4-phenylenether), Poly(2,6-diphenyl-1,4-phenylenether), Poly(2,6-dimethoxy-1,4-phenylenether), Poly(2,6-dimethyl-1,4-phenylenether) oder Poly(2,6-dibrom-1,4-phenylenether). Bevorzugterweise wird der Poly(2,6-dimethyl-1,4-phenylenether) eingesetzt. Ganz besonders bevorzugt werden Poly(2,6-dimethyl-1,4-phenylenether) mit einer Grenzviskosität zwischen 0,4 und 0,7 dl/g (gemessen in Chloroform bei 30°C).

Die Poly(phenylenether) können durch Selbstkondensation der entsprechend einwertigen Phenole unter Einwirkung von Sauerstoff in Gegenwart eines Katalysatorsystems, wie es beispielsweise in den US-Patenten 3 219 625, 3 306 874, 3 306 875, 3 956 442, 3 965 069, 3 972 851 beschrieben ist, hergestellt werden. Dabei entstehen neben den Poly(phenylenethern) stets 0,1 bis 2 Gew.%, bezogen auf das Monomere, Nebenprodukte wie 3,3',5,5'-Tetramethyldiphenochinon und/oder 3,3',5,5'-Tetramethyl-4,4-dihydroxibiphenyl, die je nach Aufarbeitungsverfahren im Polymeren verbleiben oder aus dem Polymeren entfernt werden können.

Als gegebenenfalls eingemischte Styrolpolymerisate (c) können alle bekannten aus alkenylaromatischen Monomeren aufgebauten Homo- und Copolymerisate eingesetzt werden. Als monovinylaromatische Verbindungen kommen dabei insbesondere Styrol in Betracht, ferner die kern- oder seitenkettenalkylierten Styrole. Vorzugsweise werden jedoch Styrol, p-Methylstyrol und α-Methylstyrol verwendet. Als Comonomere werden gegebenenfalls polare Verbindungen wie Acrylnitril, Acrylsäure, (Meth)acrylsäurealkylester mit 1 bis 8 C-Atomen im Alkylrest und/oder Maleinsaure eingesetzt. Der Comonomerenanteil ist dabei so bemessen, daß die resultierenden Copolymeren mit den Polyphenylenetherharzmassen homogen mischbar sind. Es können aber auch unpolare Comonomere zu statisch- oder blockartig-aufgebauten Copolymeren verwendet werden. Beispiele hierfür sind Butadien, Isopren, Pentadien u.a.

Beispiele für geeignete Homo- und Copolymerisate sind Polystyrol, Poly-p-methylstyrol, Poly-α-methylstyrol, Styrol-α-methylstyrol-, Styrol-Acrylnitril- (SAN), Styrol-Methylacrylat-, Styrol-Butylacrylat-, Styrol-Methylmethacrylat-, Styrol-Butadien-, Styrol-Maleinsäureanhydrid-Copolymerisate, Styrol-Acrylnitril-Butadien-Terpolymerisate (ABS), Copolymerisate von Ethylvinylbenzol und Divinylbenzol und dergleichen, und Gemische von Polystyrol mit Copolymerisaten der vorerwähnten Typen.

Unter Styrolpolymerisaten sollen aber auch die durch natürliche und/oder synthetische Kautschuke schlagzähmodifizierten Polystyrole zu verstehen

sein. Dabei werden als Kautschuke Polymerisate verstanden, deren Glastemperatur unterhalb von 0°C, vorzugsweise unterhalb von -20°C liegen soll. Geeignete Kautschuke im Sinne der Erfindung sind neben Naturkautschuk z.B. Polybutadien, Polyisopren und Mischpolymerisate des Butadiens und/oder Isoprens mit Styrol, Alkylestern oder Acrylsäure mit 2 bis 8 C-Atomen im Alkylrest, und mit Acrylnitril, Polymerisate der Alkylester der Acrylsäure mit 2 bis 8 C-Atomen im Alkylrest, Polyisobuten und Kautschuke auf Ethylen-Propylen-Dien-Basis.

Alle derartigen Styrolpolymerisate sind an sich bekannt, so daß sich weitere Erläuterungen erübrigen.

Polyphenylenether und Styrolpolymerisat können in jedem Gewichtsverhältnis in den Mischungen zugegen sein. Für optimale physikalische Eigenschaften der Mischung sind sie vorzugsweise in einem Mengenverhältnis von 20:1 bis 1:10, insbesondere 10:1 bis 1:5 Gewichtsteilen vorhanden.

Die Formmassen können auch ein oder mehrere übliche nichtharzartige Zusatzstoffe (d) enthalten, die gewöhnlich in Polymerisatmischungen vorhanden sind, um bestimmte physikalische und chemische Eigenschaften der darauf hergestellten Formkörper zu verbessern. Diese Mittel umfassen übliche Flammhemmer, Weichmacher, Gleit- und Entformungshilfsmittel, Antistatika, Wachse, verstärkende Fasern (z.B. Glasfasern und Graphit-Whiskers), mineralischen Füllstoffe, abriebfeste Bestandteile, Farbstoffe und Pigmente. Derartige Mittel sind z.B. in der US-A-4 172 929 als Zusatzstoffe für Poly(phenylenether)harze enthaltende Massen beschrieben. Die gegebenenfalls eingesetzten Zusatzmittel liegen in einer Gesamtmenge zwischen 1 und 50, bevorzugt 5 und 40 Gew.%, bezogen auf das Gewicht der Mischung, vor, um ihre üblichen Wirkungen zu entfalten.

Die erfindungsgemäß einzusetzenden Oxidationsstabilisatoren (b) der allgemeinen Formel I:

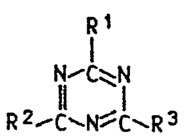

(I)

worin $R^1$ = ein Halogen, bevorzugt Chloratom, $R^2$ = ein über -O-, -NH- oder -S-gebundener organischer Rest, und $R^3$ = ein Halogen, bevorzugt Chlor, oder ein Rest wie $R^2$, können nach dem Fachmann bekannten Verfahren, ausgehend von 2,4,6-Trichlortriazin, durch Substitution, die in einzelnen Stufen abläuft, hergestellt werden (vgl. US-Patente 3 202 681, 3 245 992, 3 255 191 und 3 334 046 sowie DE-A-27 30 449 und GB-A-977 589).

Bevorzugt sind Verbindungen, in denen $R^1$ = Chlor und $R^2$ + $R^3$ = ein über -NH-gebundenes sterisch gehindertes Phenol. Bevorzugt sind auch diejenigen Verbindungen, in denen $R^1$ = Chlor, $R^2$ = eine $C_4$- bis $C_{20}$-Alkyl- oder Phenylmercaptogruppe und $R^3$ = ein über -NH-gebundenes sterisch gehindertes Phenol. Beispiele für die erfindungsgemäß einzusetzenden Stabilisatoren sind Triazine mit $R^1$ = Chlor, $R^2$ = Chlor oder wie $R^3$ = $C_4$- bis $C_{20}$-Alkylmercapto, wie Nonylmercapto-, Dodecylmercapto-, Octadecylmercapto- oder Arylmercapto, wie Phenylmercapto-, 2,4-Di-tert.-butylphenylmercapto-, 3,5-Dimethyl-4-hydroxyphenylmercapto-Gruppen oder substituierte Aniline wie 3,5-Di-tert.-butyl-4-hydroxyanilino- und 3,5-Di-methyl-4-hydroxyanilino-Gruppen. Besonders bevorzugt sind:
2-Chlor-4,6-bis(3,5-di-tert.-butyl-4-hydroxy-anilino)-s-triazin, 2,4-Bis-chloro-6-(3,5-di-tert.-butyl-4-hydroxy-anilino)-s-triazin, 2-Chlor-4-(3,5-di-tert.-butyl-4-hydroxy-anilino)-6-octylmercapto-striazin, 2,4-Bischloro-6-octylmercapto-s-triazin, 2-Chlor-4(3,5-di-tert.-butyl-4-hydroxyanilino)-6-decyl-mercapto-s-triazin, 2-Chlor-4,6-bis(3,5-ditert.-butyl-4-hydroxybenzylmercapto)-s-triazin, 2-Chlor-4-(3,5-di-tert.-4-hydroxybenzylmercapto)-6-dodecylmercapto-s-triazin, 2-Chlor-4,6-bisdodecylmercapto-s-triazin, 2-Chlor-4,6-bis(3,5-di-tert.-butyl-4-hydroxyphenylmercapto)-s-triazin, 2-Chloro-4,6-bis(3,5-dimethyl-4-hydroxyphenylmercapto)-s-triazin.

Ganz besonders geeignet sind:
2-Chlor-4,6-bis-(3,5-di-tert.-butyl-4-hydroxy-aniline)-s-triazin, 2,4-Bischloro-6-(3,5-di-tert.-butyl-4-hydroxyanilino)-s-triazin und 2-Chlor-4,6-bis(3,5-di-tert.-butyl-4-hydroxybenzylmercapto)-s-triazin.

Um wirksam zu sein, sollten die Stabilisatorverbindungen (I) bevorzugt in Mengen von 0,05 bis 5,0 Gew.%, bezogen auf das Gesamtgewicht der Mischung, in den Massen vorliegen. Beste Ergebnisse werden normalerweise unter Verwendung von Mengen im Bereich zwischen 0,05 bis 2 Gew.%, am meisten bevorzugt 0,2 bis 1 Gew.% der gesamten Mischung erzielt.

Die Art und Weise in der die erfindungsgemäßen Mischungen hergestellt werden, ist unkritisch. Bei einer Arbeitsweise werden die Einzelkomponenten in einem Mischer vorgemischt und anschließend auf einem Extruder bei Temperaturen von 150 bis 320°C konfektioniert. Üblicherweise erfolgt das Compoundieren auf Vorrichtungen, die ein homogenes Mischen zulassen, wie Knetern, Extrudern oder Walzenmischgeräten.

Die mit der Erfindung erzielten Vorteile sind insbesondere darin zu sehen, daß die erhaltenen Massen eine verbesserte Beständigkeit gegen Ther-

mooxidation aufweisen, was sich in einer hellen Eigenfarbe und guten mechanischen Eigenschaften dokumentiert.

Die erfindungsgemäßen Mischungen können nach üblichen Methoden zu üblichen Formteilen verarbeitet werden.

Die folgenden Beispiele dienen lediglich der Veranschaulichung und sollen den Umfang der Erfindung keineswegs beschränken. Sofern nicht anders angegeben, beziehen sich alle Anteilmengen auf Gewichtsbasis.

Beispiele und Vergleichsbeispiele

Die in der folgenden Tabelle 1 aufgeführten Mittel bzw. Massen wurden durch Trockenmischen der Bestandteile in einem Fluidmischer vorgemischt und anschließend bei einer Temperatur von 280°C über einen 53 mm Doppelschneckenextruder der Firma Werner und Pfleiderer, Stuttgart, konfektioniert. Zur Beurteilung der thermooxidativen Schädigung wurden aus den Mischungen auf einer Spritzgußmaschine vom Typ Arburg-Allrounder 200 bis 280°C 2 mm Rundscheiben hergestellt. Diese werden in einem Umlufttrockenschrank bei 100°C gelagert. Anschließend wurden an den Prüfkörpern die Durchstoßarbeit gemäß DIN 53 443 bei einer Prüftemperatur von 28°C ermittelt. Dabei wurde der nach 14 Tagen verbliebene prozentuale Anteil der Durchstoßarbeit bestimmt, wobei der Ausgangswert der unbelasteten Proben als 100 % angesetzt wurde. Darüber hinaus wurde der Weißindex der Probekörper nach Temperaturlagerung ermittelt.

Als Poly(phenylenether) (a) wurde ein Poly(2,6-dimethyl-1,4-phenylenether) mit einer Grenzviskosität von 0,50 dl/g (gemessen bei 30°C in Chloroform) und einem Restkupfergehalt von 5 ppm und einem Gehalt an 3,3',5,5'-Tetramethyl-4,4'-dihydroxybiphenyl von 0,9 Gew.% eingesetzt.

Als Styrolpolymerisat (c) wurden verwendet:

$c_1$) ein schlagzäh modifiziertes Polystyrol, das durch Masse-Suspensionspolymerisation von 8 Gew.% Polybutadien mit einem cis-Anteil von 96 % in Gegenwart von Styrol erzeugt wurde und eine mittlere Teilchengröße von 1,5 µm aufwies;

$c_2$) ein ABA-Blockcopolymerisat bestehend aus einem zentralen Polybutadienblock mit einem Gewichtsanteil von 70 Gew.% und außenstehenden A-Blöcken bestehend aus Polystyrol von zusammen 30 Gew.%.

Als Zusatzstoffe (d) wurden folgende Mittel verwendet:

$d_1$) Polyethylenwachs
$d_2$) Trisnonylphenylphosphit (vgl. US-A-2 952 701)
$d_3$) Titandioxid
$d_4$) Triphenylphosphat
$d_5$) Phenylneopentylenglykolphosphit (vgl. DE-A-32 41 542)

Als Stabilisatoren (b) wurden folgende Verbindungen eingesetzt:

$b_1$) 2-Chlor-4,6-Bis(3,5-di-tert.-butyl-4-hydroxyanilino)-s-triazin
$b_2$) 2-Chlor-4-(3,5-di-tert.-butyl-4-hydroxyanilino)-6-octyl-mercapto-s-triazin

Tabelle

| Beispiel | Zusammensetzung der Formmasse Gew.%) Komponenten (a) | (b) | (c) | (d) | Durchstoßbarkeit nach 14 Tage-Lagerung bei $100^0C$ (in % des Ausgangswertes) | Weißindex vor Temperaturlagerung | Weißindex nach Temperaturlagerung |
|---|---|---|---|---|---|---|---|
| 1 | 80 | 0,5 $d_1$ | 15 $b_2$ | 2 $C_1$<br>2,5 $C_3$ | 96 | 21 | 22 |
| 2 | 80 | 0,5 $d_1$ | 15 $b_2$ | 2 $C_1$<br>2,5 $C_3$ | 98 | 22 | 22 |
| 3 | 80 | 0,1 $d_1$ | 15 $b_2$ | 2,4 $C_1$<br>2,5 $C_3$ | 92 | 25 | 27 |
| 4 | 80 | 1,5 $d_1$ | 15 $b_2$ | 1 $C_1$<br>2,5 $C_3$ | 97 | 20 | 21 |
| 5 | 45 | 0,5 $d_1$ | 50 $b_2$ | 2 $C_1$<br>2,5 $C_3$ | 95 | 12 | 13 |
| 6 | 45 | 0,5 $d_1$ | 40 $b_1$ | 10 $C_4$<br>2 $C_1$<br>2,5 $C_3$ | 94 | 13 | 14 |
| 7 | 35 | 0,5 $d_2$ | 50 $b_2$<br>10 $b_2$ | 2 $C_1$<br>2,5 $C_3$ | 94 | 5 | 6 |
| 8 | 35 | 0,5 $d_2$ | 40 $b_1$<br>10 $b_2$ | 10 $C_4$<br>2 $C_1$<br>2,5 $C_3$ | 96 | 7 | 8 |

Tabelle (Fortsetzung)

| Beispiel | Zusammensetzung der Formmasse Gew.%) Komponenten (a) | (b) | (c) | (d) | Durchstoßbarkeit nach 14 Tage-Lagerung bei $100^0C$ (in % des Ausgangswertes) | Weißindex vor Temperaturlagerung | Weißindex nach Temperaturlagerung |
|---|---|---|---|---|---|---|---|
| Vergleichsversuche (nicht erfindungsgemäß) | | | | | | | |
| A | 80 | - | 15 $b_2$ | 2 $C_1$<br>0,5 $C_2$<br>2,5 $C_3$ | 71 | 25 | 31 |
| B | 80 | - | 15 $b_2$ | 2 $C_1$<br>2,5 $C_3$<br>0,5 $C_5$ | 82 | 23 | 27 |
| C | 80 | - | 15 $b_2$ | 2,5 $C_1$<br>2,5 $C_3$ | 10 | 27 | 39 |
| D | 45 | - | 59 $b_1$ | 2 $C_1$<br>0,5 $C_2$<br>2,5 $C_3$ | 58 | 16 | 22 |

Patentansprüche

1. Thermoplastische Mischungen bestehend aus (a) einem Hydroxyl- oder Aminogruppen enthaltenden Polymerisat, (b) einem Oxidationsstabilisator der allgemeinen Formel (I):

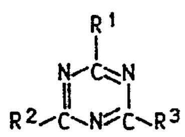

(I)

worin R1 = ein Halogenatom, $R^2$ = ein über -O-, -NH-oder -S- gebundener organischer Rest, und $R^3$ = ein Halogen oder ein Rest wie $R^2$, (c) gegebenenfalls mindestens einem Styrolpolymerisat und (d) gegebenenfalls üblichen Zusatzstoffen in üblichen Mengen.

2. Mischungen nach Anspruch 1, dadurch gekennzeichnet, daß die Komponente (a) ein Poly(ether), ein Poly(carbonat) ein Poly(ester) oder ein Poly(amid) ist.

3. Mischungen nach Anspruch 1, dadurch gekennzeichnet, daß die Komponente (a) ein Poly(phenylenether) ist.

4. Mischungen nach Anspruch 1, dadurch gekennzeichnet, daß der Stabilisator (I) in Mengen von 0,05 bis 5 Gew.%, bezogen auf das Gewicht der Mischung, vorhanden ist.

5. Mischungen nach Anspruch 1, dadurch gekennzeichnet, daß im Stabilisator (I) $R^1$ = Chlor und $R^2$ und $R^3$ = ein uber -NH-gebundenes sterisch gehindertes Phenol.

6. Mischungen nach Anspruch 1, dadurch gekennzeichnet, daß im Stabilisator (I) $R^1$ = Chlor, $R^2$ = eine $C_4$- bis $C_{20}$-Alkyl- oder Phenylmercaptogruppe und $R^3$ = ein über -NH-gebundenes sterisch gehindertes Phenol.

7. Verfahren zur Herstellung der Mischungen nach Anspruch 1, dadurch gekennzeichnet, daß die Komponenten (a), (b) und gegebenenfalls (c) und (d) in einem üblichen Mischer vorgemischt und anschließend auf Temperaturen zwischen 150 und 320°C erhitzt werden.

8. Verwendung der Mischungen nach Anspruch 1 zur thermoplastischen Verarbeitung zu Formteilen.